# EUROPEAN PATENT SPECIFICATION

(11) **EP 4 507 064 B1**
(45) Date of publication and mention of the grant of the patent: **08.10.2025**
(21) Application number: 23190029.1
(22) Date of filing: 07.08.2023
(51) Int. Cl.: H01M 10/48, G01L 11/02

(54) **BATTERY SYSTEM FOR AN ELECTRIC VEHICLE AND METHOD FOR DETERMINATION OF A THERMAL RUNAWAY**
BATTERIESYSTEM FÜR EIN ELEKTROFAHRZEUG UND VERFAHREN ZUR BESTIMMUNG EINES THERMISCHEN DURCHGEHENS
SYSTÈME DE BATTERIE POUR UN VÉHICULE ÉLECTRIQUE ET PROCÉDÉ DE DÉTERMINATION D'UN EMBALLEMENT THERMIQUE

(43) Date of publication of application: 12.02.2025
(73) Proprietor: Samsung SDI Co., Ltd., Yongin-si, Gyeonggi-do 17084 (KR)
(72) Inventor: Ipek, Eymen, 8020 Graz (AT)
(74) Representative: Gulde & Partner

(56) References cited:
- US-A1- 2022 077 507
- US-B2- 9 748 611

## Description

### Field of the Disclosure

The present disclosure relates to a battery system for an electric vehicle, an electric vehicle including the same, and a method for determination of a thermal runaway in the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above parameters, such as minimum and maximum cell voltage, state of charge (SOC) or depth of discharge (DOD) to indicate the charge level of the battery cell, state of health (SOH; a variously-defined measurement of the remaining capacity of the battery cell as % of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board is installed at each cell, with just a single communication cable between the battery cell and a controller. In yet other examples, the BMS may have a modular construction including a few controllers, each handling a certain number of cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by over-current, over-voltage (during charging), over-temperature, under-temperature, over-pressure, and ground fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

To prevent or detect thermal runaway, the battery system requires appropriate sensor technology. Due to the high hazard potential of thermal runaway, additional sensor systems for predicting or confirming critical states in the battery system are desirable in addition to the known conventional temperature monitoring.

US2022/077507A1 and US9748611B2 disclose battery systems for electric vehicles with thermal runaway detection systems using pressure sensors.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, there is provided a battery system for an electric vehicle, including:
a battery pack including a plurality of battery cells accommodated within a housing; and
a thermal runaway detection system including a sensor unit and a control unit, the sensor unit and control unit being configured for transmitting and receiving data from the sensor unit to the control unit, wherein the sensor unit is positioned within the battery pack of the battery system and includes the following features:
   - a first cover element and a second cover element arranged on and connected to the first cover element in such a way that a space is formed between the first cover element and second cover element;
   - a light emitter and a light sensor arranged within the space such that light emitted from the light emitter is receivable at the light sensor via a light path that extends across the space; and
   - the first cover element is designed to bend towards the second cover element and into the light path in the event of a pressure increase in the battery pack;
and wherein the control unit is configured to detect a possible thermal runaway based on a change in data transmitted by the sensor unit.

According to another aspect of the present disclosure, there is provided an electric vehicle including the before mentioned battery system.

Yet another aspect of the present disclosure refers to a method for determination of a thermal runaway in a battery system for an electric vehicle, wherein the method includes the steps of:
a) providing a battery system including:
   a battery pack including a plurality of battery cells accommodated within a housing; and
   a thermal runaway detection system including a sensor unit and a control unit, the sensor unit and control unit being configured for transmitting and receiving data from the sensor unit to the control unit,
   wherein the sensor unit is positioned within the battery pack of the battery system and includes the following features:
      - a first cover element and a second cover element arranged on and connected to the first cover element in such a way that a space is formed between the first cover element and second cover element;
      - a light emitter and a light sensor arranged within the space such that light emitted from the light emitter is receivable at the light sensor via a light path that extends across the space; and
      - the first cover element is designed to bend towards the second cover element and into the light path in the event of a pressure increase in the battery pack;
b) detecting a possible thermal runaway by the control unit based on a change in data transmitted by the sensor unit.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic cross section (block diagram) of a battery system according to an embodiment of the invention.
- Fig. 2: illustrates a schematic sectional view a sensor unit in a first stage according to an embodiment of the invention.
- Fig. 3: shows the sensor unit of Figure 2 in a second stage.
- Fig. 4: illustrates a flowchart of a method according to an embodiment of the invention for determination of a thermal runaway in a battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

### General Concept

The invention deals about a battery system for an electric vehicle. The battery system includes a battery pack including a plurality of battery cells accommodated within a housing. The battery system further includes a thermal runaway detection system including a sensor unit and a control unit. The sensor unit and control unit are configured for transmitting and receiving data from the sensor unit to the control unit. The sensor unit is positioned within the battery pack of the battery system and includes the following features:
- a first cover element and a second cover element arranged on and connected to the first cover element in such a way that a space is formed between the first cover element and second cover element;
- a light emitter and a light sensor arranged within the space such that light emitted from the light emitter is receivable at the light sensor via a light path that extends across the space; and
- the first cover element is designed to bend towards the second cover element and into the light path in the event of a pressure increase in the battery pack (caused by the release of gases in the event of a thermal runaway).

The control unit is configured to detect a possible thermal runaway based on a change in data transmitted by the sensor unit (due to an interruption or reduction of the light detected via the light path at the light sensor).

The gist of the invention is to easily detect a condition of the battery pack indicating a thermal runaway of at least one of the battery cells. Therefore, the battery system is equipped with a specific thermal runaway detection system. As already stated above, failures of battery cells (for example, solid or liquid lithium-ion rechargeable batteries) being used for propulsion of vehicles may lead to a thermal runaway. For example, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway. As a consequence, large quantities of hot gas may be ejected from inside of the failed battery cell through the venting opening of the housing into the battery pack. The process takes place in a very short time, so that considerable volumes of gas are released. However, conventional battery packs only allow a controlled exchange of gas with the environment in a few places. As a consequence, a pressure within the battery pack is suddenly raised and can be detected by the thermal runaway detection system.

The thermal runaway detection system includes a sensor unit and a control unit. The sensor unit and control unit are configured for transmitting and receiving data from the sensor unit to the control unit. Thus, measured data recorded by the sensor unit are transmitted to the control unit. The transmission may take place via data line or contactless, e.g. via a WLAN or Bluetooth interface. The communication between the sensor unit and the control unit may be bidirectional and may include further data and controlling signals. For example, the sensor unit may send information on its operating status on request of the control unit or send a defect message in case of failure.

The sensor unit is positioned within the battery pack of the battery system. The sensor unit should be installed inside the battery pack in such a way that an increase of pressure due to any gases released during thermal runaway can be detected immediately, but damage to the sensor unit by the gases can be avoided. The expert may find suitable positions in the battery pack on the basis of the expected distribution pattern of the gas.

The sensor unit includes a first cover element and a second cover element arranged on and connected to the first cover element in such a way that a space is formed between the first cover element and second cover element. A light emitter and a light sensor are arranged within the space such that light emitted from the light emitter is receivable at the light sensor via a light path that extends across the space. The first cover element is designed to bend towards the second cover element and into the light path in the event of a pressure increase in the battery pack caused by the release of gases in the event of a thermal runaway.

Thus, the sensor unit provides a kind of measurement chamber (i.e. the space between the first cover element und the second cover element) that is shielded and hermetically sealed for optical measurements. One wall of the measurement chamber (i.e. the first cover element) is designed in such a way that the wall can be bent towards the inside of the measurement chamber. The force to be applied for the mechanical deformation of the wall corresponds to an expected pressure increase at thermal runaway. The first cover element has elastic properties so that it can return to its original position when the pressure drops. For example, the first cover element may be formed of an elastic polymer or a thin metal sheet.

The second cover element (or the other wall of the measurement chamber), on the other hand, is dimensionally stable to any pressure change inside the battery pack, so it will not bend in the case of a thermal runaway. For example, the second cover element may be formed of a rigid metal sheet.

According to one embodiment, the second cover element of the sensor unit is a part of the housing, a part of a carrier framework or a part of an outer cover sealing of the battery pack. The housing and support structure of a battery pack is typically formed from a solid metallic material, for example extruded aluminum, to protect the battery cell from massive mechanical impact in the event of an accident. The housing and the support structure may have planar surfaces that can serve as a second cover element for the sensor unit. Similarly, a portion of an inner surface of the outer cover may be used as a second cover element. The outer cover shields the battery pack on the bottom when mounted on the vehicle and also typically has a metallic wall that is pressure resistant. In this case, light emitter, light sensor and the first cover element can be easily attached to the provided surface of said components. This may be done, for example, by gluing.

Within the measurement chamber (or space) a light emitter and a light sensor are placed. The light emitter and the light sensor are aligned with each other in a way that the emitted light can be detected by the light sensor. The light path to be bridged by the light is not blocked under normal pressure conditions in the battery pack. As the pressure increases, the first cover element bending into the light path interrupts or reduces the light transmission from the light emitter to the light sensor. Light emitter and light sensor can be supplied with power via the battery pack or another external energy source (e.g. the vehicle's electrical system).

According to an embodiment, the light emitter of the sensor unit is an LED emitting infrared light. Such light sources have proven to be suitable for the application and are also highly cost-effective. The overall height of LEDs is also particularly low, so that the overall high of the sensor unit could be kept low.

According to another embodiment, the light sensor is a photo diode. Photo diodes are highly cost-effective, of low overall height and are suitable for the intended application in a battery system.

The control unit is configured to detect a possible thermal runaway based on a change in data transmitted by the sensor unit due to an interruption or reduction of the light detected via the light path at the light sensor. The data may be transmitted continuously, at regular intervals or depending on certain operating states of the battery system. In other words, the control unit evaluates the data transmitted by the sensor unit.

According to an embodiment, the control unit is configured to determine a rapidity and/or height of the pressure increase within the battery pack based on the data transmitted from the sensor unit and is further configured to evaluate the possibility of a thermal runaway based thereon. Details will be discussed below with respect to the corresponding method for determination of a thermal runaway in the battery system.

According to another embodiment, the control unit is integrated into a battery management system, BMS, of the battery system. As already mentioned above, BMS is any electronic system that manages the battery cells, battery module and battery pack, such as by protecting the battery cells, battery modules and battery pack from operating outside their safe operating area, monitoring their states, calculating secondary data, reporting that data, controlling its environment, authenticating it and/or balancing it. Making the knowledge gained via the control unit available in the BMS and using it to control the battery system is therefore a major advantage of this embodiment.

Another aspect of the present invention refers to a method for determination of a thermal runaway in a battery system for an electric vehicle. The method includes the steps of:
a) providing a battery system as defined above, i.e. including:
   a battery pack including a plurality of battery cells accommodated within a housing; and
   a thermal runaway detection system comprising a sensor unit and a control unit, the sensor unit and control unit being configured for transmitting and receiving data from the sensor unit to the control unit,
   wherein the sensor unit is positioned within the battery pack of the battery system and comprises the following features:
      - a first cover element and a second cover element arranged on and connected to the first cover element in such a way that a space is formed between the first cover element and second cover element;
      - a light emitter and a light sensor arranged within the space such that light emitted from the light emitter is receivable at the light sensor via a light path that extends across the space;
         and
      - at least the first cover element is designed to bend towards the second cover element and into the light path in the event of a pressure increase in the battery pack;
b) detecting a possible thermal runaway by the control unit based on a change in data transmitted by the sensor unit.

Thus, the method allows to detect a potential thermal runaway in the battery system of an electric vehicle. If, for example, the evaluation of the transmitted data shows a significant increase of pressure within the battery pack, the control unit may indicate a potential occurrence of a thermal runaway.

When the first cover element fully interrupts the light path, the control unit may be configured to directly indicate the presence of a thermal runaway. However, when the first cover element is only partly blocking the light path due to an increase of internal pressure in the battery pack, the control unit may only indicate the possibility of occurrence of thermal runaway and initiate further diagnostic routines. In that case, the control unit may, for example, determine a rapidity and/or height of the pressure increase within the battery pack based on the data transmitted from the sensor unit and evaluate the possibility of thermal runaway based thereon. For practical implementation, a characteristic curve for increase of pressure in case of thermal runaway may be stored in a memory of the control unit and compared with the course of pressure transmitted by the sensor unit. Alternatively or in addition, the control unit may be configured to indicate the possibility of thermal runaway when a change in data representing an increase of pressure over a distinct time period exceeds a certain threshold value. The characteristic curve or threshold values must be defined individually for the respective battery pack.

In any case, the control unit may start additional routines to clarify the safety status of the battery pack, for example, evaluation of temperature data measured in the battery pack. Furthermore, the control unit may initiate counter measures, for example, activation of cooling means.

### Specific Embodiments

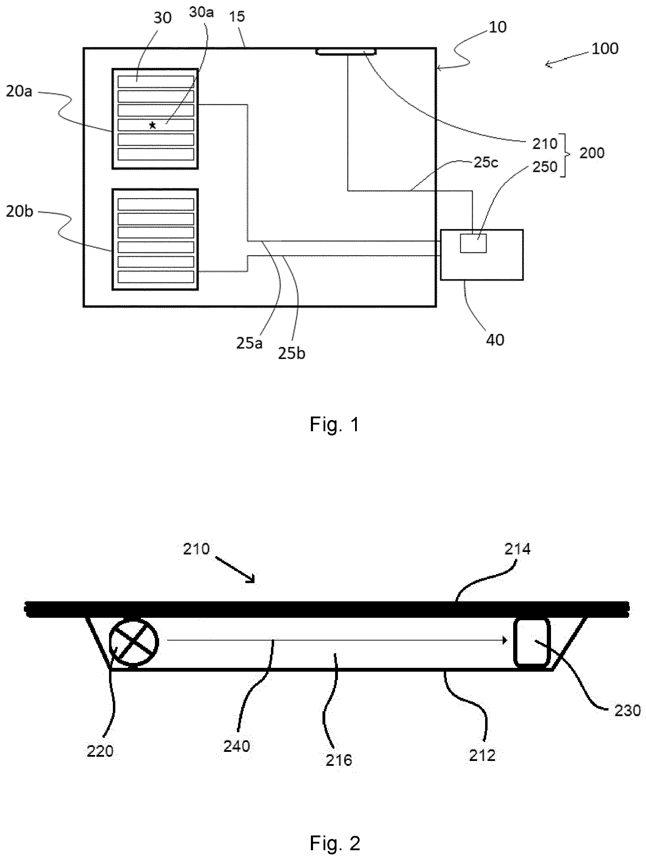

Fig. 1 is a schematic cross section (block diagram) of a battery system 100 according to an embodiment of the invention. In the depicted example, two battery modules 20a, 20b are accommodated within a housing 15 of a battery pack 10. Each of the battery modules 20a, 20b includes a plurality of battery cells 30 (e.g., lithium-ion rechargeable battery cells). A single battery cell 30a may, under unfavorable circumstances, switch to a faulty operating state known as thermal runaway, which leads to the release of considerable quantities of hot gas within a very short time. The gas usually escapes abruptly at an upper side of the battery cell 30a, as there is usually a pressure relief valve in the battery cell's case (location of release is labelled with a star). The battery modules 20a, 20b are controlled and monitored by and thus connected via cable-connections 25a, 25b with a battery management system, BMS, 40.

The battery system 100 further includes a thermal runaway detection system 200 including a sensor unit 210 and a control unit 250. The sensor unit 210 is controlled and monitored by and connected via a cable-connection 25c with the control unit 250. Thus, measurement data can be transmitted from the sensor unit 210 to the control unit 250. The communication between the sensor unit 210 and the control unit 250 may be bidirectional and may include further data and controlling signals. For example, the sensor unit 210 may send information on its operating status on request of the control unit 250 or send a defect message in case of failure.

The sensor unit 210 is positioned within the battery pack 10 of the battery system 100. According to the illustrated embodiment, the sensor unit 210 is installed inside the battery pack 10 at an inner surface of the housing 15. The position of the sensor unit 210 is selected such that hot gases released from any defect battery cell 30a do not directly hit the sensor unit 210 so as to avoid damage. On the other hand, the position is also chosen so that a change in pressure inside the battery pack 10 is immediately detected.

Here, the control unit 250 is integrated into the BMS 40. The data obtained by the control unit 250 from the measurement data of the sensor unit 210 can thus be processed directly in the BMS 40.

Figure 2 shows in a schematic sectional view the sensor unit 210 in a first stage, which can be used in the battery system 100 of Figure 1. The sensor unit 210 includes a first cover element 212 and a second cover element 214 arranged on and connected to the first cover element 212 in such a way that a space 216 is formed between the first cover element 212 and second cover element 214. A light emitter 220 and a light sensor 230 are arranged within the space 216 such that light 240 emitted from the light emitter 220 is receivable at the light sensor 230 via a light path that extends across the space 216. According to the embodiment, the light emitter 220 is an LED emitting infrared light and the light sensor 230 is a photo diode being sensible for infrared light.

The first cover element 212 is designed to bend towards the second cover element 214 and into the light path in the event of a pressure increase in the battery pack 10. To ensure the function, the first cover element 212 may be, for example, a membrane made of an elastomeric material. The second cover element 214 should not exhibit elastic behavior when pressure rises inside the battery pack 10. The second cover element 214 may therefore be a part of the housing 15, for example, a part of the housing 15 showing a planar inner surface. It is also conceivable that a part of a carrier framework (not shown) or a part of an outer cover sealing of the battery pack 10 (not shown) may form the second cover element 214. Of course, the second cover element 214 can also be implemented as an independent structural element of the sensor unit 210.

The sensor unit 210 is in the illustrated first stage when the internal pressure within the battery pack 10 is within a range for battery packs in normal operation. The light 240 emitted by the light emitter 220 can fall on the light sensor 230 in a direct path and unobstructed. A signal corresponding to the amount of light received is transmitted from the light sensor 230 to the control unit 250 accordingly.

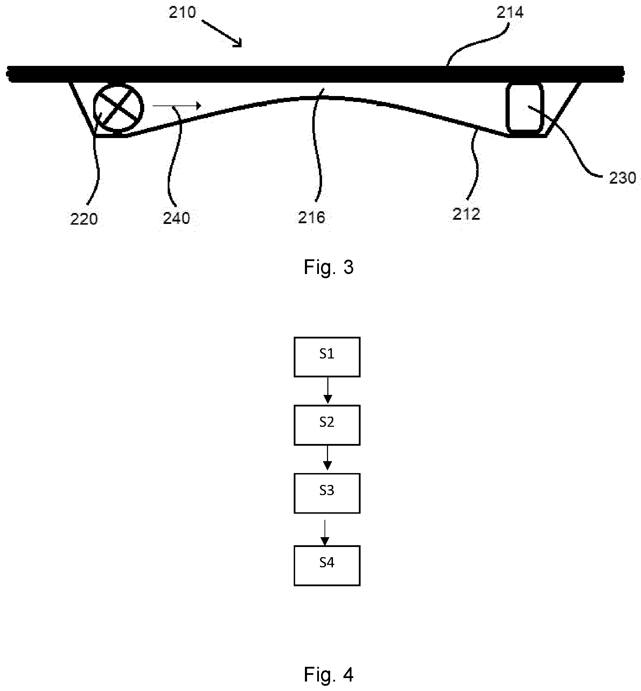

Figure 3 shows the sensor unit 210 of Figure 2 in a second stage. Due to an increase of the internal pressure within the battery pack 10, the first cover element 212 is bend towards the second cover element 214 and blocks the light path. As a consequence, the light 240 emitted from the light emitter 220 cannot directly reach the light sensor 230. Accordingly, there is a significant change to the measured data of the light sensor 230 transmitted to the control unit 250. If the first cover element 212 touches the second cover element 214, even no light 240 will fall on the light sensor 230 anymore. An increase of the internal pressure within the battery pack 10 may be a result of a thermal runaway of the failed battery cell 30a.

The control unit 250 is configured to detect a possible thermal runaway based on a change in data transmitted by the sensor unit 210.

Fig. 4 illustrates a flowchart of a method according to an embodiment of the invention for determination of thermal runaway in the battery system 100.

In a first step S1 of the method, a battery system 100 as described in the previous sections is provided.

In a second step S2, a continuously measuring the amount of light 240 received at the light sensor 230 is carried out in the sensor unit 210. The measured data are transmitted to the control unit 250. The data may be transmitted continuously, at regular intervals or depending on certain operating states of the battery system 100.

In step S3, detecting a possible thermal runaway is carried out by the control unit 250 based on a change in data transmitted by the sensor unit 210. In case no change in data is detected by the control unit 250, there is likely no thermal runaway. When the first cover element 212 fully interrupts the light path, the control unit 250 may directly indicate the presence of a thermal runaway.

In case the light path is only partly blocked by the bended first cover element 212 (for example, as illustrated in Figure 3), the control unit 250 may evaluate a rapidity and/or height of the pressure increase within the battery pack 10 based on the data transmitted from the sensor unit 210 and evaluate the possibility of thermal runaway based thereon. According to the exemplary embodiment, a characteristic curve for increase of pressure in case of thermal runaway is stored in a memory of the control unit 250. The stored characteristic curve is compared with the course of pressure transmitted by the sensor unit 210. If the course of the curve is the same, the control unit 250 indicates the possibility of the occurrence of thermal runaway.

In step S4, the control unit 250 generates a corresponding status message to the BMS 40. The BMS 40 may start additional routines to clarify the safety status of the battery pack 10, for example, evaluation of temperature data measured in the battery pack 10. Furthermore, the BMS 40 may initiate counter measures, for example, activation of cooling means. Further safety measures may be started by the BMS 40, respectively safety system of the vehicle. For example, the vehicle can be automatically stopped, a cooling system and/or a fire-extinguishing system can be started. Also, warning signals can be triggered inside the passenger compartment of the vehicle.

### Reference signs

- 10: battery pack
- 15: housing
- 20a, 20b: battery modules
- 25a, 25b, 25c: cable-connections
- 30: battery cells
- 30a: defect battery cell
- 40: battery management system BMS
- 100: battery system

- 200: thermal runaway detection system
- 210: sensor unit
- 212: first cover element
- 214: second cover element
- 216: space
- 220: light emitter
- 230: light sensor
- 240: light

## Claims

1. A battery system (100) for an electric vehicle, comprising:
a battery pack (10) comprising a plurality of battery cells (30) accommodated within a housing (15); and
a thermal runaway detection system (200) comprising a sensor unit (210) and a control unit (250), the sensor unit (210) and control unit (250) being configured for transmitting and receiving data from the sensor unit (210) to the control unit (250),
wherein the sensor unit (210) is positioned within the battery pack (10) of the battery system (100) and comprises:
- a first cover element (212) and a second cover element (214) arranged on and connected to the first cover element (212) in such a way that a space (216) is formed between the first cover element (212) and second cover element (214);
- a light emitter (220) and a light sensor (230) arranged within the space (216) such that light (240) emitted from the light emitter (220) is receivable at the light sensor (230) via a light path that extends across the space (216); and
- the first cover element (212) is designed to bend towards the second cover element (214) and into the light path in the event of a pressure increase in the battery pack (10);
and wherein the control unit (250) is configured to detect a possible thermal runaway based on a change in data transmitted by the sensor unit (210).

2. The battery system according to claim 1, wherein the second cover element of the sensor unit is a part of the housing (15), a part of a carrier framework or a part of an outer cover sealing of the battery pack (10).

3. The battery system according to any of the preceding claims, wherein the control unit (250) is integrated into a battery management system, BMS, (40) of the battery system (100).

4. The battery system according to any of the preceding claims, wherein the control unit (250) is configured to determine a rapidity and/or height of the pressure increase within the battery pack (10) based on the data transmitted from the sensor unit (210) and to evaluate the possibility of a thermal runaway based thereon.

5. The battery system according to any of the preceding claims, wherein the light emitter (220) of the sensor unit (210) is an LED emitting infrared light.

6. The battery system according to any of the preceding claims, wherein the light sensor (230) is a photo diode.

7. An electric vehicle comprising the battery system (100) according to any of the preceding claims.

8. A method for determination of a thermal runaway in a battery system (100) for an electric vehicle, wherein the method comprises the steps of:
a) providing a battery system (100) comprising:
a battery pack (10) including a plurality of battery cells (30) accommodated within a housing (15); and
a thermal runaway detection system (200) comprising a sensor unit (210) and a control unit (250), the sensor unit (210) and control unit (250) being configured for transmitting and receiving data from the sensor unit (210) to the control unit (250),
wherein the sensor unit (210) is positioned within the battery pack (10) of the battery system (100) and comprises:
- a first cover element (212) and a second cover element (214) arranged on and connected to the first cover element (212) in such a way that a space (216) is formed between the first cover element (212) and second cover element (214);
- a light emitter (220) and a light sensor (230) arranged within the space (216) such that light (240) emitted from the light emitter (220) is receivable at the light sensor (230) via a light path that extends across the space (216); and
- the first cover element (212) is designed to bend towards the second cover element (214) and into the light path in the event of a pressure increase in the battery pack (10);
b) detecting a possible thermal runaway by the control unit (250) based on a change in data transmitted by the sensor unit (210).

9. The method of claim 8, wherein the control unit (250) determines a rapidity and/or height of the pressure increase within the battery pack (10) based on the data transmitted from the sensor unit (210) and evaluates the possibility of a thermal runaway based thereon.

## Patentansprüche

1. Batteriesystem (100) für ein Elektrofahrzeug, umfassend:
einen Batteriepack (10), der eine Vielzahl von Batteriezellen (30) umfasst, die in einem Gehäuse (15) untergebracht ist; und
ein System (200) zur Erkennung eines thermischen Durchgehens, das eine Sensoreinheit (210) und eine Steuereinheit (250) umfasst, wobei die Sensoreinheit (210) und die Steuereinheit (250) zum Übertragen und Empfangen von Daten von der Sensoreinheit (210) an die Steuereinheit (250) konfiguriert sind,
wobei die Sensoreinheit (210) innerhalb des Batteriepacks (10) des Batteriesystems (100) positioniert ist und Folgendes umfasst:
- ein erstes Abdeckungselement (212) und ein zweites Abdeckungselement (214), das so auf dem ersten Abdeckungselement (212) angeordnet und mit diesem verbunden ist, dass zwischen dem ersten Abdeckungselement (212) und dem zweiten Abdeckungselement (214) ein Raum (216) ausgebildet ist;
- einen Lichtemitter (220) und einen Lichtsensor (230), die so in dem Raum (216) angeordnet sind, dass von dem Lichtemitter (220) emittiertes Licht (240) über einen Lichtpfad, der sich durch den Raum (216) erstreckt, an dem Lichtsensor (230) empfangbar ist; und
- wobei das erste Abdeckungselement (212) so gestaltet ist, dass es sich im Falle eines Druckanstiegs im Batteriepack (10) in Richtung des zweiten Abdeckungselements (214) und in den Lichtpfad biegt;
und wobei die Steuereinheit (250) konfiguriert ist, um ein mögliches thermisches Durchgehen basierend auf einer Änderung der von der Sensoreinheit (210) übertragenen Daten zu erkennen.

2. Batteriesystem nach Anspruch 1, wobei das zweite Abdeckungselement der Sensoreinheit ein Teil des Gehäuses (15), ein Teil eines Trägerrahmens oder ein Teil einer Außenabdeckungsdichtung des Batteriepacks (10) ist.

3. Batteriesystem nach einem der vorhergehenden Ansprüche, wobei die Steuereinheit (250) in ein Batterieverwaltungssystem, BMS, (40) des Batteriesystems (100) integriert ist.

4. Batteriesystem nach einem der vorhergehenden Ansprüche, wobei die Steuereinheit (250) konfiguriert ist, um basierend auf den von der Sensoreinheit (210) übertragenen Daten eine Geschwindigkeit und/oder Höhe des Druckanstiegs innerhalb des Batteriepacks (10) zu bestimmen und basierend darauf die Wahrscheinlichkeit eines thermischen Durchgehens zu bewerten.

5. Batteriesystem nach einem der vorhergehenden Ansprüche, wobei der Lichtemitter (220) der Sensoreinheit (210) eine Infrarotlicht emittierende LED ist.

6. Batteriesystem nach einem der vorhergehenden Ansprüche, wobei der Lichtsensor (230) eine Fotodiode ist.

7. Elektrofahrzeug, das das Batteriesystem (100) nach einem der vorhergehenden Ansprüche umfasst.

8. Verfahren zur Bestimmung eines thermischen Durchgehens in einem Batteriesystem (100) für ein Elektrofahrzeug, wobei das Verfahren die folgenden Schritte umfasst:
a) Bereitstellen eines Batteriesystems (100), umfassend:
einen Batteriepack (10), der eine Vielzahl von Batteriezellen (30) enthält, die in einem Gehäuse (15) untergebracht ist; und
ein System (200) zur Erkennung eines thermischen Durchgehens, das eine Sensoreinheit (210) und eine Steuereinheit (250) umfasst, wobei die Sensoreinheit (210) und die Steuereinheit (250) zum Übertragen und Empfangen von Daten von der Sensoreinheit (210) an die Steuereinheit (250) konfiguriert sind,
wobei die Sensoreinheit (210) innerhalb des Batteriepacks (10) des Batteriesystems (100) positioniert ist und Folgendes umfasst:
- ein erstes Abdeckungselement (212) und ein zweites Abdeckungselement (214), das so auf dem ersten Abdeckungselement (212) angeordnet und mit diesem verbunden ist, dass zwischen dem ersten Abdeckungselement (212) und dem zweiten Abdeckungselement (214) ein Raum (216) ausgebildet ist;
- einen Lichtemitter (220) und einen Lichtsensor (230), die so in dem Raum (216) angeordnet sind, dass von dem Lichtemitter (220) emittiertes Licht (240) über einen Lichtpfad, der sich durch den Raum (216) erstreckt, an dem Lichtsensor (230) empfangbar ist; und
- wobei das erste Abdeckungselement (212) so gestaltet ist, dass es sich im Falle eines Druckanstiegs im Batteriepack (10) in Richtung des zweiten Abdeckungselements (214) und in den Lichtpfad biegt;
b) Erkennen eines möglichen thermischen Durchgehens durch die Steuereinheit (250) basierend auf einer Änderung der von der Sensoreinheit (210) übertragenen Daten.

9. Verfahren nach Anspruch 8, wobei die Steuereinheit (250) basierend auf den von der Sensoreinheit (210) übertragenen Daten eine Geschwindigkeit und/oder Höhe des Druckanstiegs innerhalb des Batteriepacks (10) bestimmt und basierend darauf die Wahrscheinlichkeit eines thermischen Durchgehens bewertet.

## Revendications

1. Système de batterie (100) pour un véhicule électrique, comportant :
un bloc-batterie (10) comportant une pluralité de cellules de batterie (30) logées à l'intérieur d'un boîtier (15) ; et
un système de détection d'emballement thermique (200) comportant une unité de capteur (210) et une unité de commande (250), l'unité de capteur (210) et l'unité de commande (250) étant configurées pour transmettre et recevoir des données de l'unité de capteur (210) à l'unité de commande (250),
dans lequel l'unité de capteur (210) est positionnée à **l'intérieur** du bloc-batterie (10) du système de batterie (100) et comporte :
- un premier élément de couvercle (212) et un deuxième élément de couvercle (214) agencé sur le premier élément de couvercle (212) et relié à celui-ci de sorte qu'un espace (216) soit formé entre le premier élément de couvercle (212) et le deuxième élément de couvercle (214) ;
- un émetteur de lumière (220) et un capteur de lumière (230) agencés à **l'intérieur** de **l'espace** (216) de sorte que la lumière (240) émise par l'émetteur de lumière (220) puisse être reçue au niveau du capteur de lumière (230) via un trajet lumineux qui s'étend à travers l'espace (216) ; et
- le premier élément de couvercle (212) est conçu pour se courber vers le deuxième élément de couvercle (214) et dans le trajet lumineux en cas d'augmentation de pression dans le bloc-batterie (10) ;
et dans lequel l'unité de commande (250) est configurée pour détecter un emballement thermique possible sur la base d'un changement de données transmises par l'unité de capteur (210).

2. Système de batterie selon la revendication **1,** dans lequel le deuxième élément de couvercle de l'unité de capteur est une partie du boîtier (15), une partie d'une structure porteuse ou une partie d'un joint de couvercle externe du bloc-batterie (10).

3. Système de batterie selon l'une quelconque des revendications précédentes, dans lequel l'unité de commande (250) est intégrée dans un système de gestion de batterie, BMS, (40) du système de batterie (100).

4. Système de batterie selon l'une quelconque des revendications précédentes, dans lequel l'unité de commande (250) est configurée pour déterminer une rapidité et/ou une hauteur de l'augmentation de pression à l'intérieur du bloc-batterie (10) sur la base des données transmises par l'unité de capteur (210) et pour évaluer la possibilité d'un emballement thermique sur la base de celles-ci.

5. Système de batterie selon l'une quelconque des revendications précédentes, dans lequel l'émetteur de lumière (220) de l'unité de capteur (210) est une DEL émettant une lumière infrarouge.

6. Système de batterie selon l'une quelconque des revendications précédentes, dans lequel le capteur de lumière (230) est une photodiode.

7. Véhicule électrique comportant le système de batterie (100) selon l'une quelconque des revendications précédentes.

8. Procédé de détermination d'un emballement thermique dans un système de batterie (100) pour un véhicule électrique, dans lequel le procédé comporte les étapes suivantes :
a) la fourniture d'un système de batterie (100) comportant :
un bloc-batterie (10) incluant une pluralité de cellules de batterie (30) logées à l'intérieur d'un boîtier (15) ; et
un système de détection d'emballement thermique (200) comportant une unité de capteur (210) et une unité de commande (250), l'unité de capteur (210) et l'unité de commande (250) étant configurées pour transmettre et recevoir des données de l'unité de capteur (210) à l'unité de commande (250),
dans lequel l'unité de capteur (210) est positionnée à **l'intérieur** du bloc-batterie (10) du système de batterie (100) et comporte :
- un premier élément de couvercle (212) et un deuxième élément de couvercle (214) agencé sur le premier élément de couvercle (212) et relié à celui-ci de sorte qu'un espace (216) soit formé entre le premier élément de couvercle (212) et le deuxième élément de couvercle (214) ;
- un émetteur de lumière (220) et un capteur de lumière (230) agencés à l'intérieur de l'espace (216) de sorte que la lumière (240) émise par l'émetteur de lumière (220) puisse être reçue au niveau du capteur de lumière (230) via un trajet lumineux qui s'étend à travers l'espace (216) ; et
- le premier élément de couvercle (212) est conçu pour se courber vers le deuxième élément de couvercle (214) et dans le trajet lumineux en cas d'augmentation de pression dans le bloc-batterie (10) ;
b) la détection d'un emballement thermique possible par l'unité de commande (250) sur la base d'un changement de données transmises par l'unité de capteur (210).

9. Procédé selon la revendication 8, dans lequel l'unité de commande (250) détermine une rapidité et/ou une hauteur de l'augmentation de pression à l'intérieur du bloc-batterie (10) sur la base des données transmises par l'unité de capteur (210) et évalue la possibilité d'un emballement thermique sur la base de celles-ci.
